# EUROPEAN PATENT SPECIFICATION

(11) **EP 3 100 833 B1**
(45) Date of publication and mention of the grant of the patent: **04.11.2020**
(21) Application number: 16172259.0
(22) Date of filing: 31.05.2016
(51) Int. Cl.: B25J 15/06, B65G 47/91, F15B 15/14

(54) **SUCTION DEVICE AND PNEUMATIC CYLINDER PROVIDED WITH AN ANTI-ROTATION MECHANISM**
SAUGVORRICHTUNG UND PNEUMATISCHER ZYLINDER MIT EINEM ANTIROTATIONSMECHANISMUS
DISPOSITIF D'ASPIRATION ET CYLINDRE PNEUMATIQUE AVEC UN MÉCANISME ANTI-ROTATION

(30) Priority: 04.06.2015 IT UB20151151
(43) Date of publication of application: 07.12.2016
(73) Proprietor: Camozzi S.p.A. Societa' Unipersonale, 25122 Brescia (IT)
(72) Inventor: CAMOZZI, Marco, I-25122 BRESCIA (IT); CHIARINI, Pierluigi, I-25122 BRESCIA (IT)
(74) Representative: Chimini, Francesco

(56) References cited:
- FR-A- 1 323 164
- US-A1- 2006 043 747
- US-A1- 2006 196 354
- US-B2- 8 267 449

## Description

This invention relates to anti-rotation mechanisms for elements which extend along a main axis and are movable in translation along said main axis.

In the field of industrial automation, and in particular the sector of members for gripping and handling parts being machined or other components, wide use is made of pneumatically operated prehensile members, for example suction cups, able to adhere to a surface of the part to be picked thanks to the vacuum created by a suction system, duly connected with the suction cups.

A first object of this invention is a device for the support of a pneumatically operated prehensile member, for example a suction cup, able to support the prehensile member and transmit the vacuum to it, and to be in turn connected to a support frame connected to the suction system.

Said support devices are typically provided with a stem, at the end of which is connected the suction cup, able to translate with respect to a main body, intended for rigid connection with the support frame. The translation of the stem is essential for absorbing the shock due to the engagement of the suction cup on the part to be picked.

Moreover, such devices are typically provided with an anti-rotation mechanism, able to prevent rotation of the stem with respect to the main body. In fact, because of inaccuracies in gripping a piece or due to the action of the weight of the piece during handling, the piece itself manifests a tendency to rotate that, if not prevented, could lead to the detachment of the suction cup from the gripping surface.

There are many examples of embodiments of support devices provided with an anti-rotation mechanism. An example with an anti-rotation mechanism based on the cooperation of a ball connected to the main body and a groove made in the stem is described in document US 8,267,449, upon which the preamble of claim 1 is based.

A further example, with an anti-rotation mechanism based on the cooperation of a guide member rigidly connectable to the main body and bearing an extended contact surface, and a channel made in the stem, is disclosed in US 2006043747 A1 which relates to an adjustable mount for vacuum cup.

However, the support devices with anti-rotation mechanism known today have a complex structure, which drives up the production costs of the device, and are often not reliable, with continuous breakdowns and consequent need of replacement, especially in the case of moving of heavy loads.

A second object of this invention is a pneumatic cylinder provided with an anti-rotation mechanism.

US 2006196354 A1, upon which the preamble of independent claim 17 is based, discloses a pneumatic cylinder with an anti-rotation mechanism based on the cooperation of a guide member rigidly connectable to a main body and bearing an extended contact surface, and a channel made in a stem.

The purpose of this invention is to provide devices with an improved anti-rotation mechanism, in a first aspect a support device for pneumatic prehensile members, such as suction cups, and in a second aspect a pneumatic cylinder.

This purpose is achieved in a first aspect by a support device according to claim 1, and in a second aspect by a pneumatic cylinder according to claim 17. The dependent claims 2 to 16 describe variant embodiments of the support device.

The characteristics and advantages of the devices according to this invention will be apparent from the following description, given by way of non-limiting example, with reference to accompanying figures, in which:
- Figure 1 shows a support device according to this invention, according to an embodiment;
- Figure 2 is a side view of the support device of Figure 1;
- Figure 3 is a front view of the support device of Figure 1;
- Figure 4 is a sectional view of the support device, along the section plane IV-IV in Figure 3;
- Figure 5 is a sectional view of the support device, along the section plane V-V of Figure 3;
- Figure 6 shows the support device of Figure 1, in separate parts;
- Figure 7 shows a support device according to this invention, according to a further embodiment;
- Figure 8 is a side view of the support device of Figure 7;
- Figure 9 is a section view of the support device of Figure 7, along the section plane IX-IX of Figure 8;
- Figure 10 is a sectional view of the support device of Figure 7, along the section plane X-X of Figure 8;
- Figure 11 shows the support device of Figure 7, in separate parts;
- Figure 12 is a shoe of an anti-rotation mechanism of the support device according to this invention, in accordance with an embodiment;
- Figure 13 is a shoe of an anti-rotation mechanism of the support device according to this invention, in accordance with a further embodiment;
- Figures 14a, 14b and 14c show a damped gripping device provided with an anti-rotation mechanism according to this invention;
- Figures 14d and 14e are sectional views of the damped gripping device of Figures 14a, 14b and 14c; and
- Figure 15 is a sectional view of a pneumatic cylinder provided with an anti-rotation mechanism according to this invention.

With reference to the accompanying figures, reference number 1 globally indicates a support and vacuum supply device for a pneumatic prehensile member, such as for example a suction cup.

The device 1 is suitable to mechanically support the prehensile member and to supply this with air in depression, so as to activate it for gripping a piece, for example a part being machined or to be handled or a component of a machine. Furthermore, the device 1 is suitable to be rigidly connected to a support frame, possibly together with a plurality of further support devices, each carrying a respective prehensile member.

The device 1 comprises a main body 2 intended to be rigidly connected to the support frame.

The main body 2 comprises a casing 3, for example made in a single piece of metallic material, typically steel, which extends axially between a rear surface 4, destined for coupling with the support frame, and an opposite front surface 6.

The casing 3 is internally hollow, forming a casing chamber 7 passing between the rear surface 4 and the front surface 6.

The main body 2 also comprises a sleeve 8, projecting axially from the rear surface 4 of the casing 3; preferably, said sleeve 8 and said casing 3 are made together in one piece.

The sleeve 8 is also internally hollow, for a sleeve chamber 10 open at the rear and communicating anteriorly with the casing chamber 7.

The main body 2 therefore has a single internal compartment, formed by the casing chamber 7 and the sleeve chamber 8, passing axially between the ends of the body 2.

The device 1 also comprises a movable element 12, at least partially housed in the main body 2, which extends along a translation axis X, between a rear end 14, projecting from the sleeve 8, and a front end 16, projecting from the front surface 6 of the casing 3.

The movable element 12 is internally hollow, forming a pass-through power supply duct 18 that extends between the rear end 14 and the front end 16, flowing through a respective rear mouth 20 and a front mouth 22.

The movable element 12 comprises a piston portion 24, partly received in the casing chamber 7 and partly in the sleeve chamber 10, comprising a stem 26 that passes through the sleeve chamber 10 and terminates at the rear end 14, and an annular shoulder 28, adjacent to the stem 26, projecting radially from this, received in the casing chamber 7.

The piston portion 24 is sealingly slidable in the main body 2.

For example, the sleeve chamber 10 has at least a first sealing seat 30 in which is received a first sealing ring 32; the outer lateral surface of the stem 26 is at least partially sealingly engaged with the sealing ring 32. For example, the shoulder 28 has at least a second sealing seat 34 in which is received a second sealing ring 36; the outer lateral surface of the shoulder 28 is thus sealingly slidable with respect to the lateral surface that delimits the casing chamber 7.

The movable element 12 also comprises an extension portion 40, adjacent to the piston portion 24, partly received in the casing chamber 7 and partly projecting outwards from the front surface 6.

The movable element 12 preferably provides a sensor seat 42, for example provided on the extension portion 40, adjacent to the shoulder 28 of the piston portion 24.

For example, the sensor seat 42 receives a magnet 42a of the device 1.

Preferably, moreover, the device 1 comprises a pair of detectors (not shown) mounted in predetermined fixed positions, spaced apart axially, in the main body 2, for example in the casing 3, suitable for detecting the position of the magnet 42a.

The magnet and detectors realise an example of a detection means suitable for detecting the axial position assumed by the movable element 12, and in particular suitable to detect the positioning of the movable element 12 in the advanced limit position (end of exiting stroke from the front part of the main body 2) and in the retracted limit position (end of the return stroke).

The extension portion 40 also includes a tang 44, for example adjacent the magnet seat, which extends axially towards the front mouth 22, so as to be accessible from the side of the front surface 6 of the main body 2, for example projecting anteriorly from the front surface 6.

Preferably, the piston portion 24 and the extension portion 40 are made in one piece, for example by machining by removal of chips from a bar.

The main body 2 is at least partially closed at the front.

For example, the device 1 comprises a front cover 60, sealingly applied in the casing 3, in correspondence of the front surface 6; the cover 60 thus anteriorly delimits the casing chamber 7 and is maintained in position by a circlip 62.

The cover 60 is pierced so as to allow the exit of the tang 44 of the movable element 12; preferably, the cover 60, in the pass-through hole for the tang, provides for at least a third sealing seat 66 which receives a third sealing ring 64, sealingly engaged with the tang 44.

The device 1 is provided with an anti-rotation mechanism suitable to prevent the rotation of the movable element 12 about the main axis X.

The anti-rotation mechanism includes at least one flattened surface 82, 84 formed on the outer lateral surface of an engagement portion 86 of the stem 26.

For example, the engagement portion 86 of the stem 26 is an end portion, having a predefined axial length, ending at the rear end 14 of said stem 26. Said engagement portion 86 has on the outer lateral surface of said one or more flattened surfaces 82,84, for example a pair of flattened surfaces 82,84, preferably parallel and opposed.

The anti-rotation mechanism also provides at least one shoe 92a,94a,92b,94b applicable to the main body 2 of the device 1 and engageable with flattened surface 82,84 to achieve an anti-rotation constraint for the movable element 12. For example, the anti-rotation mechanism is provided with a pair of shoes 92a,94a;92b,94b.

Preferably, the shoe 92a,94a,92b,94b is engaged with the sleeve 8 of the main body 2, and in particular is insertable in a slot 102a, 104a,102b,104b provided inside said sleeve. For example, the anti-rotation mechanism is provided with a pair of slots 102a, 104a; 102b, 104b each for receiving the respective shoe 92a, 94a; 92b, 94b.

Preferably, the slot 102a, 104a, 102b, 104b passes through the thickness of the sleeve 8, so that the shoe 92a,94a,92b,194b inserted in it is visible from the outside and typically emerges to the outside.

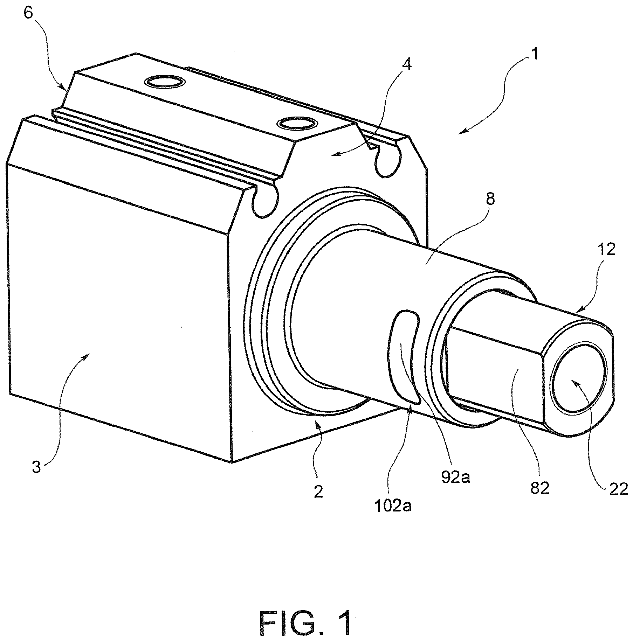

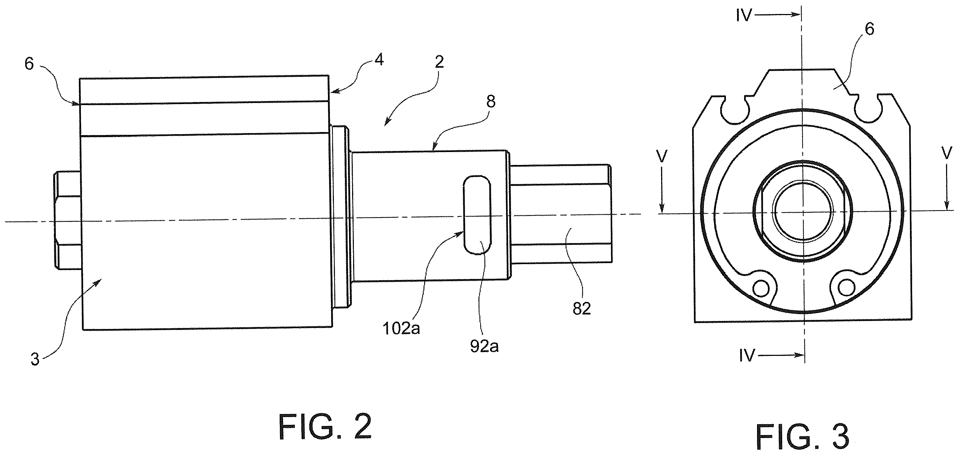

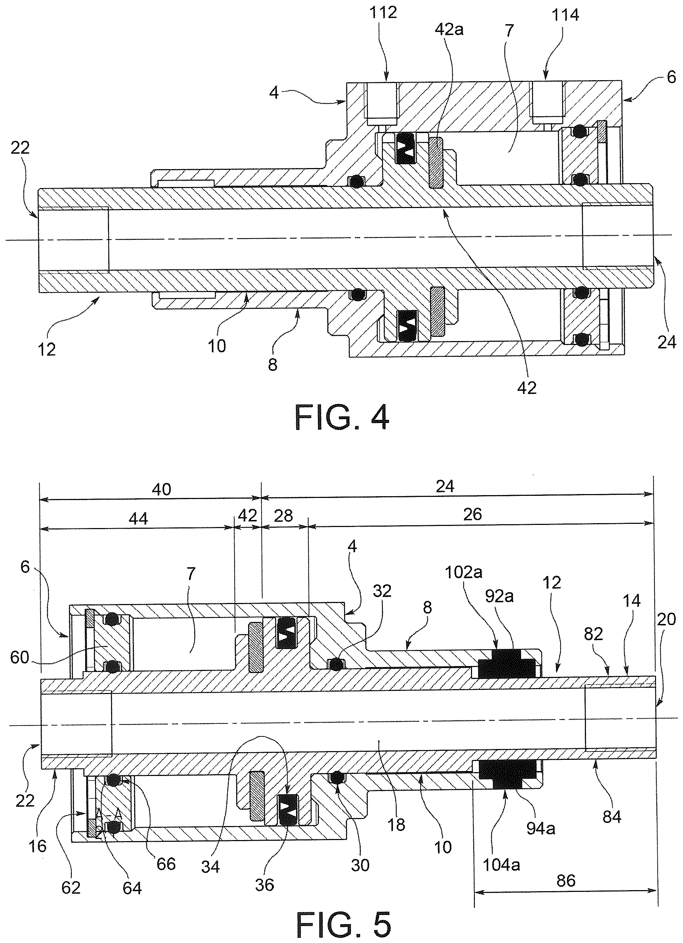

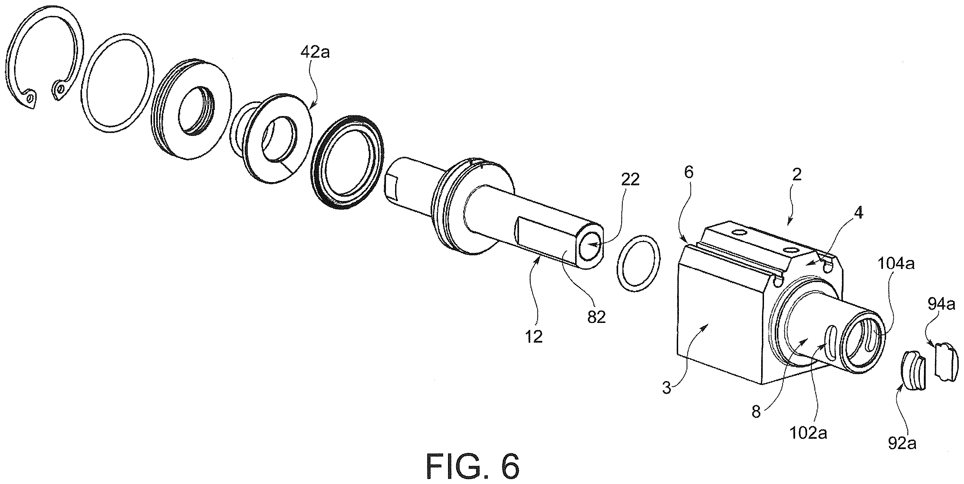

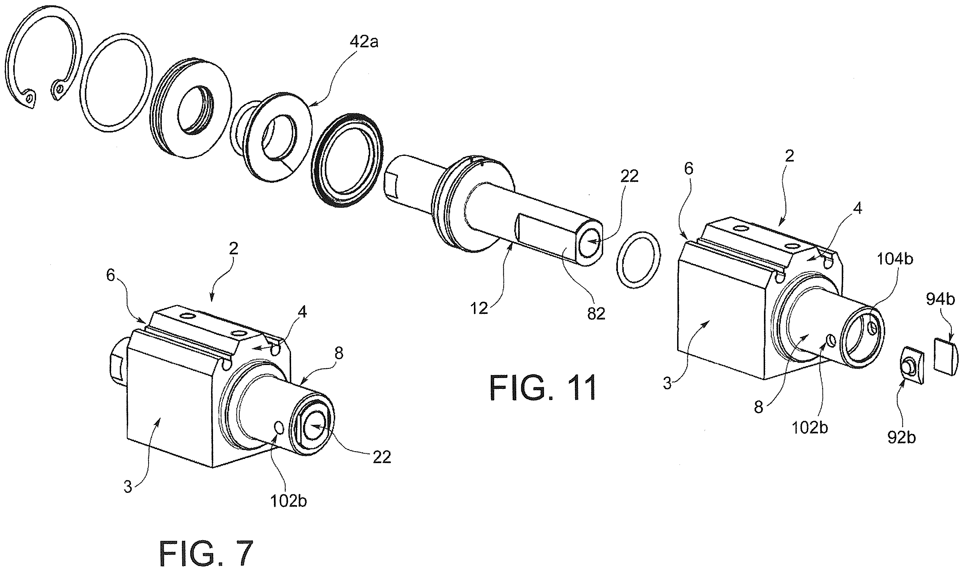

According to a first embodiment (Figures 1 to 7 and Figure 12), the shoe 92a,94a includes a contact portion 200 intended to come into contact with the respective flattened surface 82,84 of the engagement portion 86 of the stem 26 through a contact surface 202, typically flat.

Having applied the shoe to the main body 2 of the device 1, the contact surface 202 has a predetermined extension along the axial direction and a predetermined extension along a direction K orthogonal to this. For example, the contact surface 202 is rectangular or square.

The shoe 92a,94a comprises in addition an engagement portion 204, rigidly connected to the contact portion 200, projecting from the latter from the opposite side to the contact surface 202 and suitable to be inserted in the slot 102a,104a to form the anti-rotation constraint.

For example, the engagement portion 204 surmounts the contact portion 200 and extends outside it in the direction K orthogonal to the axial direction X.

Preferably, also, along the axial direction X, the engagement portion 204 has extension such as to be contained within the contact portion 200.

So, the engagement portion 204 has the form of an approximately rectangular tongue, slightly curved circumferentially, rounded at the corners.

The slot 102a, 104a has an outline such as to mate with shape-coupling with the engagement portion 204, for example, with tolerances of between 0 and +0.1 millimetres.

In the specific case, the slot 102a,104a has a slot-shaped contour, circumferentially elongated.

Preferably, the shoe 92a, 94a is made in one piece, for example by machining by removal of chips.

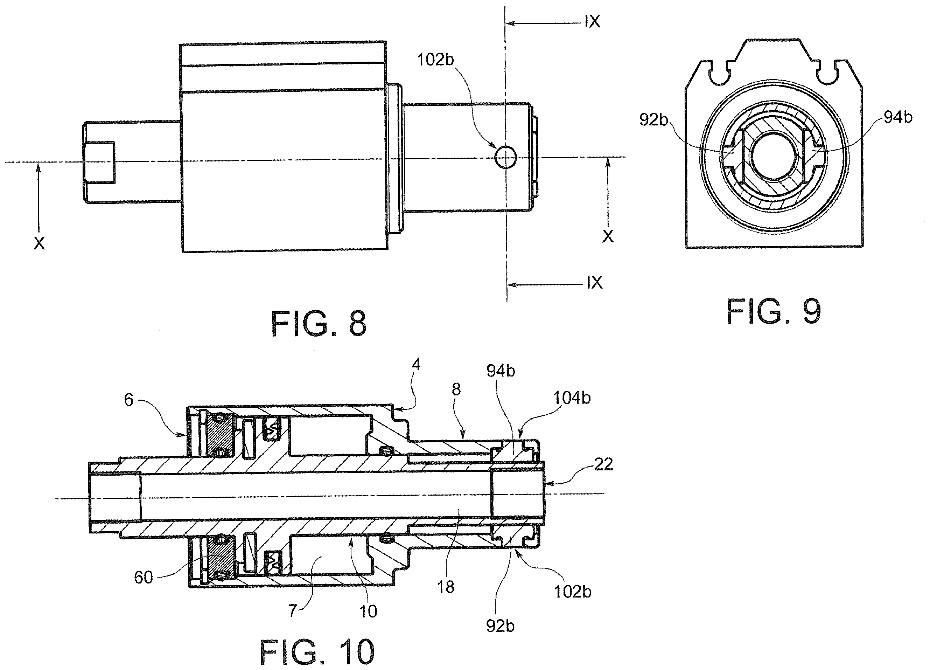

According to a further embodiment (Figures 8 to 11 and Figure 13), the shoe 92b,94b the engagement portion 204 surmounts the contact portion 200 and has an extension such as to be contained within the contact portion 200 both in the direction K orthogonal to the axial direction X and in the axial direction X.

For example, the engagement portion 204 has the form of a circular cylinder, unloaded at the base to the junction with the contact portion 200.

The slot 102a, 104a has an outline such as to mate with shape-coupling with the engagement portion 204, for example, with tolerances of between 0 and +0.1 millimetres.

In the specific case the slot 102b,104b is a circular through hole.

Preferably, the shoe 92b, 94b is made in a single piece, for example by moulding.

Generally, moreover, the shoe 92a, 94a, 92b, 94b is made of a self-lubricating material, for example a plastic material, such as an acetal resin.

Preferably, the device 1 also comprises pneumatic actuation means for the movement in translation of the movable element 12, so as to permit the approach and distancing along the main axis X of the prehensile member to the piece to be picked.

For example, the device 1 includes an alternating translation of the movable element 12; for this purpose, the main body includes a pair of connections 112,114, one that extends upstream and the other that extends downstream of the shoulder 28 of the piston portion 24, for operative connection with a pressurised air supply device.

According to an alternative embodiment, the device 1 includes return means, for example comprising a spring, which permanently influence the movable element 12 towards an end of stroke limit position, while the other end of stroke limit position is reachable by pneumatic actuation.

In normal use, the support device 1 is applied to the pneumatic prehensile member, at the front end 16 of the movable element 12, fluidically connected with the rear mouth 20 for supply the vacuum.

The main body 2 is rigidly connected to a support frame, in general together with a plurality of further support devices, each carrying a respective prehensile member.

The movable element 12 is fluidically connected to a suction device through the rear mouth 20, so as to supply vacuum to the prehensile member through the supply duct 18.

Finally, if necessary, the device 1 is operatively connected with a pressurised air supply device for the translational actuation of the movable element 12.

For the picking a piece, the support frame, moved for example by a manipulator or a robot, is brought close to the piece to be picked.

The device 1 is actuated pneumatically, so that the movable element 12 translates along the main axis X, bringing the prehensile member in contact, with thrust, on the gripping surface of the piece to be picked.

When the suction cups are in position, the actuation of the suction device allows supplying vacuum to the suction cups through the supply duct 18 of the movable element 12. The suction cups thus adhere to the gripping surface and the piece can be lifted, moved or positioned according to the needs.

In this circumstance, the action of the shoes 92a,94a,92b,94b on the engagement portion 86 of the movable element 12 prevents the rotation of said movable element 12 with respect to the main axis X, thus avoiding the generation of torsion actions able to affect the adherence of the suction cups to the gripping surface.

Innovatively, the support device according to this invention overcomes the drawbacks of the known art.

In particular, the shoes have a very extensive contact surface with the engagement portion of the stem, due to which the torsion action is distributed over a large surface, significantly reducing the risk of breakage of the shoes.

Advantageously, moreover, the connection of the shoes to the main body is very reliable.

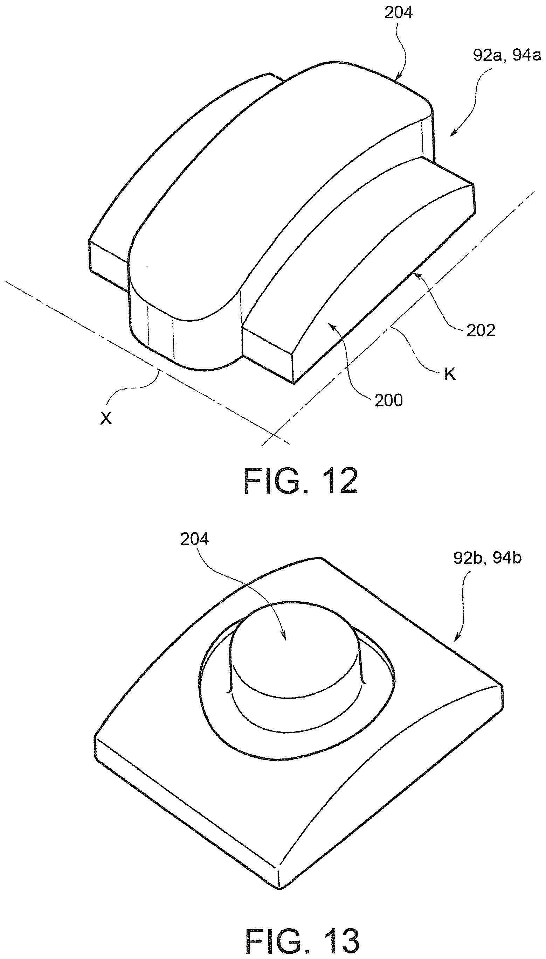

In particular, the variant with extended engagement portion (Figure 12) allows to unloading the actions that are generated on a wide contact surface, reducing the risk of breakage; such a variant, realised through machining, for example by the removal of chips, is more expensive, but it makes the device particularly suitable to support heavy loads.

On the contrary, the variant with reduced engagement portion (Figure 13), made by moulding, is more economical and suitable to bear less heavy loads.

Advantageously, moreover, the invention allows further reducing the frequency and difficulty of maintenance, especially as regards greasing, since the shoes are made of self-lubricating material.

Advantageously, moreover, the shoes are realised of different materials, depending on the temperature requirements or conditions of use of the device.

According to a further advantageous aspect, the support device according to the invention has a particularly simple structure, so that assembly is facilitated, typically without the need for special tools.

According to a still further advantageous aspect, the realisation of the device does not require special machining or precision, and the engagement portion of the stem does not require tight tolerances, so that production costs are reduced.

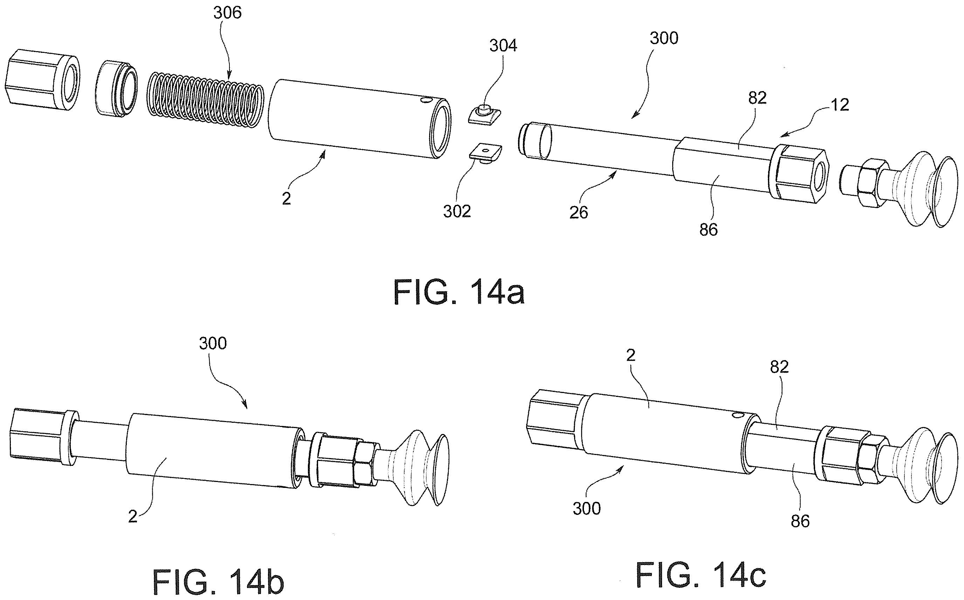

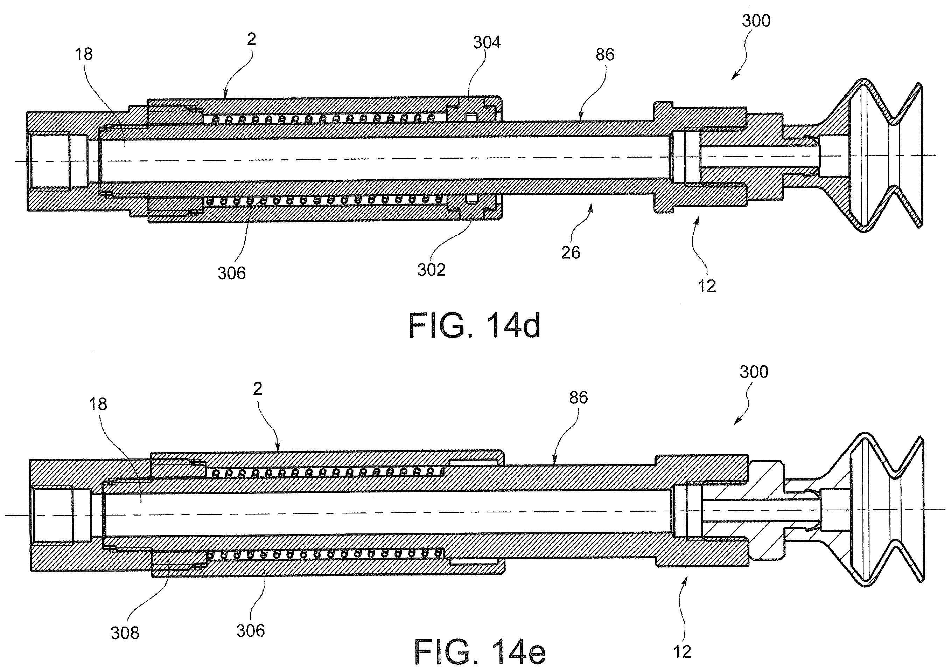

The anti-rotation mechanism described above is also usable in further applications, such as for example a damped gripping device 300 (Figures 14a to 14e), provided with at least one shoe 302,304, acting on the engagement portion 86 made on the stem 26 of the movable element 12.

The engagement portion 86 is provided with flattened surfaces 82,84; the shoe 302,304 is rigidly connectable to the main body 2; the movable element 12 is provided with the power supply conduit 18.

The device 300 is provided with a spring 306, housed in the main body 2 and operating in compression between the main body 2 and the movable body 12, suitable to permanently influence the movable body 12 towards an end of stroke position, for example towards an advancement limit position.

For example, the spring 306 is mounted concentrically to the stem 26, outside of the engagement portion 86, for example between a shoulder of said engagement portion 86 and a locknut 308 fixed to the main body 2, for example by screwing, passed through by the movable element 12.

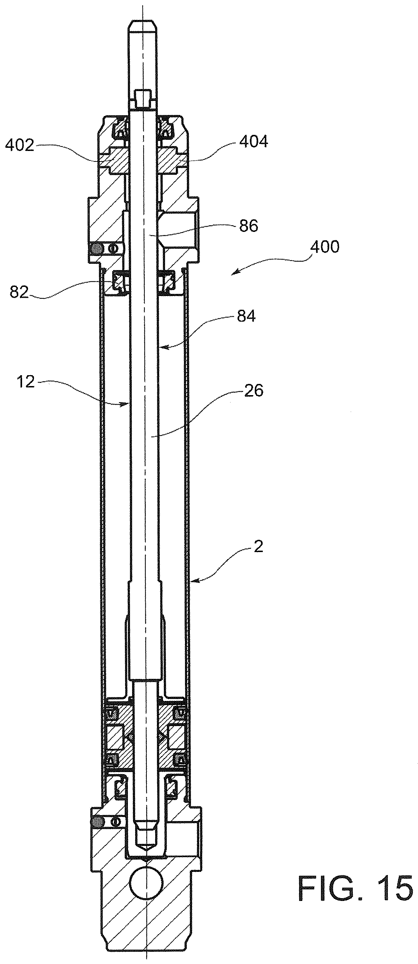

According to a second aspect of the invention, a pneumatic cylinder 400 (Figure 15), of simple or double effect, is provided with an anti-rotation mechanism.

The cylinder 400 is provided with at least one shoe 402,404, acting on the engagement portion 86 made on the stem 26 of the movable element 12.

The engagement portion 86 is provided with flattened surfaces 82,84; the shoe 302,304 is rigidly connectable to the main body 2.

It is clear that one skilled in the art, in order to meet contingent needs, may make changes to the support device and anti-rotation mechanism described above, all contained within the scope of protection defined by the following claims.

## Claims

1. Support and vacuum power device (1,300) for a pneumatic prehensile member, for example a suction cup, comprising:
- a main body (2) for connection to a support frame;
- a movable element (12) which extends along a main axis (X) and movable in translation along said main axis (X), provided with a power supply duct (18) which comes out at the back through a rear mouth (20), destined for the pneumatic connection with a suction device, and at the front through a front mouth (22), destined for the pneumatic connection with the prehensile member;
- an anti-rotation mechanism comprising at least one engagement portion (86) on a stem (26) of the movable element (12) and at least one shoe (92a, 94a, 92b, 94b, 302, 304) rigidly connectable to the main body (2) and bearing an extended contact surface (202) for effective contact with the engagement portion (86) of the movable element (12), thus making an anti-rotation constraint for said movable element (12),
**characterized in that** the engagement portion (86) consists of a pair of opposite and parallel flattened surfaces (82,84) of the stem (26), and **in that** said extended contact surface (202) consists of a flat surface (202) intended to come into contact with the respective flattened surface (82, 84) .

2. Device according to claim 1, in which a pair of shoes (92a, 94a, 92b, 94b, 302, 304) is provided for operating on opposite engagement portions (86).

3. Device according to claim 1 or 2, wherein the shoe is removable from a slot (102a, 102b, 104b, 104a) of the main body (2).

4. Device according to claim 3, wherein the main body (2) comprises a sleeve (8) projecting rearwards from a casing (3) of the main body (2), the stem (26) is guided in translation in said sleeve (8) and the slot is made in said sleeve.

5. Device according to any of the preceding claims, wherein the flattened surface extends as far as the rear end (14) of the stem (26).

6. Device according to any of the preceding claims, wherein the shoe is made in a single piece, for example of self-lubricating plastic material, for example of acetal resin.

7. Device according to any of the preceding claims, wherein, having applied the shoe to the main body (2), the contact surface (202) has a predetermined extension in an axial direction (X) and a predetermined extension in a direction (K) orthogonal to the axial direction.

8. Device according to claim 7, wherein the contact surface (202) is rectangular or square.

9. Device according to claim 7 or 8, wherein the shoe (92a, 94a) comprises a contact portion (200) bearing the contact surface (202), and an engagement portion (204), rigidly connected to the contact portion (200), projecting from the latter from the opposite side to the contact surface (202) and suitable to be inserted in the main body (2) to form the anti-rotation constraint.

10. Device according to claim 9, wherein the engagement portion (204) surmounts the contact portion (200) and extends outside it in the direction (K) orthogonal to the axial direction (X).

11. Device according to claim 10, wherein the slot (102a,104a) presents a buttonhole outline, circumferentially elongated, such as to couple with the engagement portion (204) of the shoe (92a,94a) in a shaped coupling.

12. Device according to claim 10, wherein the engagement portion (204), for example in the shape of a circular cylinder, surmounts the contact portion (200) and has an extension such as to be contained within the contact portion (200) both in the direction (K) orthogonal to the axial direction (X) and in the axial direction (X).

13. Device according to claim 12, wherein the slot (102b, 104b) is a circular through hole.

14. Device (1) according to any of the preceding claims wherein the movable element (12) is pneumatically movable.

15. Device (300) according to any of the preceding claims wherein the movable element (12) is damped.

16. Device according to claim 15, comprising a spring (306) operating in compression between the main body (2) and the movable element (12), suitable to permanently influence the movable element towards an end stroke position.

17. Pneumatic cylinder (400), comprising:
- a main body (2);
- a movable element (12) which extends along a main axis (X) and pneumatically movable in translation along said main axis (X);
- an anti-rotation mechanism comprising at least one engagement portion (86) made on a stem (26) of the movable element (12) and at least one shoe (402,404) rigidly connectable to the main body (2) and bearing an extended contact surface (202) for effective contact with the engagement portion (86) of the movable element (12), thus making an anti-rotation constraint for said movable element (12), **characterized in that** the engagement portion (86) consists of a pair of opposite and parallel flattened surface (82,84) of the stem (26), and **in that** said extended contact surface (202) consists of a flat surface (202) intended to come into contact with the respective flattened surface (82, 84).

## Patentansprüche

1. Stütz- bzw. Träger- und Vakuum- bzw. Saugantriebsvorrichtung (1, 300) für ein pneumatisches Greifglied, beispielsweise einen Saugnapf, umfassend:
- einen Hauptkörper (2) zur Verbindung mit einem Stütz- bzw. Trägerrahmen;
- ein bewegliches Element (12), das sich entlang einer Hauptachse (X) erstreckt und in Translation entlang der Hauptachse (X) beweglich ist, versehen mit einem Leistungsversorgungskanal (18), der hinten durch eine hintere Öffnung (20), die für die pneumatische Verbindung mit einer Saugvorrichtung bestimmt ist, und vorne durch eine vordere Öffnung (22) herauskommt, die für die pneumatische Verbindung mit dem Greifglied bestimmt ist;
- einen Antirotationsmechanismus, der zumindest einen Eingriffsabschnitt (86) an einem Schaft (26) des beweglichen Elements (12) und zumindest einen Schuh (92a, 94a, 92b, 94b, 302, 304) umfasst, der starr mit dem Hauptkörper (2) verbindbar ist und eine erstreckte bzw. verlängerte Kontaktfläche (202) zum effektiven Kontakt mit dem Eingriffsabschnitt (86) des beweglichen Elements (12) trägt bzw. lagert, wodurch eine Antirotationsbeschränkung für das bewegliche Element (12) hergestellt ist;
**dadurch gekennzeichnet, dass** der Eingriffsabschnitt (86) aus einem Paar gegenüberliegender bzw. entgegengesetzter und paralleler abgeflachter Flächen (82, 84) des Schafts (26) besteht und dass die verlängerte Kontaktfläche (202) aus einer flachen Fläche (202) besteht, die dazu bestimmt ist, mit der jeweiligen abgeflachten Fläche (82, 84) in Kontakt zu kommen.

2. Vorrichtung nach Anspruch 1, wobei ein Paar Schuhe (92a, 94a, 92b, 94b, 302, 304) für den Betrieb an gegenüberliegenden bzw. entgegengesetzten Eingriffsabschnitten (86) bereitgestellt ist.

3. Vorrichtung nach Anspruch 1 oder 2, wobei der Schuh aus einem Schlitz (102a, 102b, 104b, 104a) des Hauptkörpers (2) entfernbar ist.

4. Vorrichtung nach Anspruch 3, wobei der Hauptkörper (2) eine Hülse (8) umfasst, die von einem Gehäuse (3) des Hauptkörpers (2) nach hinten vorspringt, wobei der Schaft (26) in Translation in der Hülse (8) geführt ist und der Schlitz in der Hülse hergestellt ist.

5. Vorrichtung nach einem der vorhergehenden Ansprüche, wobei sich die abgeflachte Fläche bis zu dem hinteren Ende (14) des Schafts (26) erstreckt.

6. Vorrichtung nach einem der vorhergehenden Ansprüche, wobei der Schuh einstückig hergestellt ist, beispielsweise aus selbstschmierendem Kunststoffmaterial, beispielsweise aus Acetalharz.

7. Vorrichtung nach einem der vorhergehenden Ansprüche, wobei nach dem An- bzw. Aufbringen des Schuhs an dem Hauptkörper (2) die Kontaktfläche (202) eine vorbestimmte Erstreckung bzw. Ausdehnung in einer axialen Richtung (X) und eine vorbestimmte Erstreckung bzw. Ausdehnung in einer Richtung (K) orthogonal zu der axialen Richtung aufweist.

8. Vorrichtung nach Anspruch 7, wobei die Kontaktfläche (202) rechteckig oder quadratisch ist.

9. Vorrichtung nach Anspruch 7 oder 8, wobei der Schuh (92a, 94a) einen Kontaktabschnitt (200), der die Kontaktfläche (202) trägt bzw. lagert, und einen Eingriffsabschnitt (204) umfasst, der starr mit dem Kontaktabschnitt (200) verbunden ist, von letzterem von der gegenüberliegenden bzw. entgegengesetzten Seite zu der Kontaktfläche (202) vorspringt und geeignet ist, in den Hauptkörper (2) eingesetzt zu werden, um die Antirotationsbeschränkung zu bilden.

10. Vorrichtung nach Anspruch 9, wobei der Eingriffsabschnitt (204) den Kontaktabschnitt (200) überragt und sich außerhalb davon in der Richtung (K) orthogonal zu der axialen Richtung (X) erstreckt.

11. Vorrichtung nach Anspruch 10, wobei der Schlitz (102a, 104a) einen umfänglich bzw. umfangsmäßig länglichen Knopflochumriss darstellt, um mit dem Eingriffsabschnitt (204) des Schuhs (92a, 94a) in einer geformten Kopplung bzw. Formkopplung zu koppeln.

12. Vorrichtung nach Anspruch 10, wobei der Eingriffsabschnitt (204), beispielsweise in Form eines Kreiszylinders, den Kontaktabschnitt (200) überragt und eine Erstreckung aufweist, um innerhalb des Kontaktabschnitts (200) sowohl in der Richtung (K) orthogonal zu der axialen Richtung (X) als auch in der axialen Richtung (X) enthalten zu sein.

13. Vorrichtung nach Anspruch 12, wobei der Schlitz (102b, 104b) ein kreisförmiges Durchgangsloch ist.

14. Vorrichtung (1) nach einem der vorhergehenden Ansprüche, wobei das bewegliche Element (12) pneumatisch beweglich ist.

15. Vorrichtung (300) nach einem der vorhergehenden Ansprüche, wobei das bewegliche Element (12) gedämpft ist.

16. Vorrichtung nach Anspruch 15, umfassend eine Feder (306), die unter Druck bzw. in Kompression zwischen dem Hauptkörper (2) und dem beweglichen Element (12) arbeitet, geeignet, das bewegliche Element dauerhaft in Richtung einer Endhubposition zu beeinflussen.

17. Pneumatischer Zylinder (400), umfassend:
- einen Hauptkörper (2);
- ein bewegliches Element (12), das sich entlang einer Hauptachse (X) erstreckt und in Translation entlang der Hauptachse (X) pneumatisch beweglich ist;
- einen Antirotationsmechanismus, der zumindest einen Eingriffsabschnitt (86) an einem Schaft (26) des beweglichen Elements (12) und zumindest einen Schuh (402, 404) umfasst, der starr mit dem Hauptkörper (2) verbindbar ist und eine erstreckte bzw. verlängerte Kontaktfläche (202) zum effektiven Kontakt mit dem Eingriffsabschnitt (86) des beweglichen Elements (12) trägt bzw. lagert, wodurch eine Antirotationsbeschränkung für das bewegliche Element (12) hergestellt ist;
**dadurch gekennzeichnet, dass** der Eingriffsabschnitt (86) aus einem Paar gegenüberliegender bzw. entgegengesetzter und paralleler abgeflachter Flächen (82, 84) des Schafts (26) besteht und dass die verlängerte Kontaktfläche (202) aus einer flachen Fläche (202) besteht, die dazu bestimmt ist, mit der jeweiligen abgeflachten Fläche (82, 84) in Kontakt zu kommen.

## Revendications

1. Dispositif de soutien et de vide (1, 300) pour un organe préhenseur pneumatique, par exemple une ventouse, comprenant :
- un corps principal (2) pour une connexion à un cadre porteur ;
- un élément mobile (12) qui s'étend le long d'un axe principal (X) et mobile en translation le long dudit axe principal (X), doté d'un conduit d'alimentation électrique (18) qui sort à l'arrière à travers une ouverture arrière (20), destinée à la connexion pneumatique avec un dispositif d'aspiration, et à l'avant à travers une ouverture avant (22), destinée à la connexion pneumatique avec l'organe préhenseur ;
- un mécanisme anti-rotation comprenant au moins une partie de mise en prise (86) sur une tige (26) de l'élément mobile (12) et au moins un patin (92a, 94a, 92b, 94b, 302, 304) pouvant être connecté de manière rigide au corps principal (2) et portant une surface de contact étendue (202) pour un contact efficace avec la partie de mise en prise (86) de l'élément mobile (12), créant ainsi une contrainte anti-rotation pour ledit élément mobile (12),
**caractérisé en ce que**
la partie de mise en prise (86) est constituée d'une paire de surfaces aplaties opposées et parallèles (82, 84) de la tige (26), et **en ce que**
ladite surface de contact étendue (202) est constituée d'une surface plate (202) conçue pour venir en contact avec la surface aplatie respective (82, 84).

2. Dispositif selon la revendication 1, dans lequel une paire de patins (92a, 94a, 92b, 94b, 302, 304) est fournie pour fonctionner sur des parties de mise en prise opposées (86).

3. Dispositif selon la revendication 1 ou 2, dans lequel le patin peut être retiré d'une fente (102a, 102b, 104b, 104a) du corps principal (2).

4. Dispositif selon la revendication 3, dans lequel le corps principal (2) comprend un manchon (8) faisant saillie vers l'arrière depuis une enveloppe (3) du corps principal (2), la tige (26) est guidée en translation dans ledit manchon (8) et la fente est créée dans ledit manchon.

5. Dispositif selon l'une quelconque des revendications précédentes, dans lequel la surface aplatie s'étend jusqu'à l'extrémité arrière (14) de la tige (26).

6. Dispositif selon l'une quelconque des revendications précédentes, dans lequel le patin est formé d'un seul tenant, par exemple en un matériau plastique auto-lubrifiant, par exemple en résine d'acétal.

7. Dispositif selon l'une quelconque des revendications précédentes, dans lequel, après avoir appliqué le patin sur le corps principal (2), la surface de contact (202) a une extension prédéterminée dans une direction axiale (X) et une extension prédéterminée dans une direction (K) perpendiculaire à la direction axiale.

8. Dispositif selon la revendication 7, dans lequel la surface de contact (202) est rectangulaire ou carrée.

9. Dispositif selon la revendication 7 ou 8, dans lequel le patin (92a, 94a) comprend une partie de contact (200) portant la surface de contact (202), et une partie de mise en prise (204), connectée de manière rigide à la partie de contact (200), faisant saillie depuis cette dernière du côté opposé à la surface de contact (202) et appropriée pour être insérée dans le corps principal (2) pour former la contrainte anti-rotation.

10. Dispositif selon la revendication 9, dans lequel la partie de mise en prise (204) est placée au-dessus de la partie de contact (200) et s'étend hors de celle-ci dans la direction (K) perpendiculaire la direction axiale (X).

11. Dispositif selon la revendication 10, dans lequel la fente (102a, 104a) présente un contour d'œillet, allongé de manière circonférentielle, de manière à se coupler à la partie de mise en prise (204) du patin (92a, 94a) en un couplage façonné.

12. Dispositif selon la revendication 10, dans lequel la partie de mise en prise (204), par exemple sous forme d'un cylindre circulaire, est placée au-dessus de la partie de contact (200) et a une extension de manière à être logée dans la partie de contact (200) à la fois dans la direction (K) perpendiculaire à la direction axiale (X) et dans la direction axiale (X).

13. Dispositif selon la revendication 12, dans lequel la fente (102b, 104b) est un trou traversant circulaire.

14. Dispositif (1) selon l'une quelconque des revendications précédentes, dans lequel l'élément mobile (12) est mobile de manière pneumatique.

15. Dispositif (300) selon l'une quelconque des revendications précédentes, dans lequel l'élément mobile (12) est amorti.

16. Dispositif selon la revendication 15, comprenant un ressort (306) fonctionnant en compression entre le corps principal (2) et l'élément mobile (12), approprié pour solliciter en permanence l'élément mobile vers une position de fin de course.

17. Cylindre pneumatique (400), comprenant :
- un corps principal (2) ;
- un élément mobile (12) qui s'étend le long d'un axe principal (X) et mobile en translation de manière pneumatique le long dudit axe principal (X) ;
- un mécanisme anti-rotation comprenant au moins une partie de mise en prise (86) créée sur une tige (26) de l'élément mobile (12) et au moins un patin (402, 404) pouvant être connecté de manière rigide au corps principal (2) et portant une surface de contact étendue (202) pour un contact efficace avec la partie de mise en prise (86) de l'élément mobile (12), créant ainsi une contrainte anti-rotation pour ledit élément mobile (12),
**caractérisé en ce que**
la partie de mise en prise (86) est constituée d'une paire de surfaces aplaties opposées et parallèles (82, 84) de la tige (26), et **en ce que**
ladite surface de contact étendue (202) est constituée d'une surface plate (202) conçue pour venir en contact avec la surface aplatie respective (82, 84).
